Europäisches Patentamt

European Patent Office

Office européen des brevets

(19)

(11) Numéro de publication : **0 310 505 B1**

# FASCICULE DE BREVET EUROPEEN

(12)

(45) Date de publication du fascicule du brevet :
07.08.91 Bulletin 91/32

(51) Int. Cl.⁵ : **C03B 37/012, C03B 23/07**

(21) Numéro de dépôt : **88402452.2**

(22) Date de dépôt : **28.09.88**

(54) Procédé de fabrication de fibre optique avec préforme obtenue par rétreint.

(30) Priorité : **29.09.87 FR 8713439**

(43) Date de publication de la demande :
**05.04.89 Bulletin 89/14**

(45) Mention de la délivrance du brevet :
**07.08.91 Bulletin 91/32**

(84) Etats contractants désignés :
**AT BE CH DE ES FR GB GR IT LI LU NL SE**

(56) Documents cités :
**DE-C- 507 213**
**FR-A- 2 436 111**
**US-A- 2 613 479**
**US-A- 3 249 414**

(73) Titulaire : **ALCATEL ALSTHOM COMPAGNIE GENERALE D'ELECTRICITE**
**54, rue La Boétie**
**F-75382 Paris Cédex 08 (FR)**

(72) Inventeur : **Fitoussi, Jean Guy**
**12 Résidence des Chênes**
**F-94420 Plessis Trevise (FR)**
Inventeur : **Goudeau, Jacques**
**5, rue de la Poste**
**F-91070 Bondoufle (FR)**
Inventeur : **Cornebois, Michel**
**2 Résidence Louis Babin**
**F-91290 Saint Germain les Arpajon (FR)**

(74) Mandataire : **Weinmiller, Jürgen et al**
**Lennéstrasse 9 Postfach 24**
**W-8133 Feldafing (DE)**

EP 0 310 505 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne la fabrication de fibres optique.

Un procédé connu pour la fabrication de telles fibres comporte diverses opérations qui sont communes, au moins quant à certaines de leurs finalités, à ce procédé connu et au procédé selon l'invention.

On va tout d'abord indiquer ces opérations :

Une première opération commune consiste à se procurer, par fabrication ou par achat, un tube de verre qui a subi divers traitements et qui sera appelé ci-après "tube traité". Ce tube est typiquement constitué de silice. D'un point de vue géométrique, il peut être défini par le fait qu'il présente un axe, une longueur s'étendant selon cet axe d'une extrémité arrière à une extrémité avant, et une épaisseur s'étendant entre deux surfaces cylindriques intérieure et extérieure qui sont de révolution autour dudit axe et qui présentent deux diamètres intérieur et extérieur, respectivement. Cette surface intérieure entoure un espace intérieur. La composition et l'indice de réfraction du verre de ce tube varient dans son épaisseur avec la distance audit axe, de manière à former un couche de coeur s'étendant dans cette épaisseur à partir de ladite surface intérieure et une couche de gaine présentant un indice de réfraction plus faible et entourant cette couche de coeur.

Ce tube traité est classiquement obtenu par un traitement au cours duquel lesdits couches de gaine et de coeur sont formées sur la surface intérieure d'un tube substrat par des dépôts successifs de silice dopée. Un tel dépôt est obtenu à partir d'un mélange gazeux réactif qui circule dans l'espace intérieur au tube substrat et qui se décompose localement dans une zone chaude. Le chauffage de cette zone est réalisé à l'aide d'un chalumeau qui est extérieur au tube et qui balaie la longueur de celui-ci pour réaliser un dépôt uniforme. Le tube est entraîné en même temps en rotation autour de son axe horizontal.

Pour réaliser de tels dépôts internes dans le cadre de la fabrication de fibres optiques, on connaît des procédés appelés "M.C.V.D", "P.C.V.D", "S.P.C.V.D"...Les tubes substrats utilisés dans ce cadre ont habituellement des épaisseurs de l'ordre de 2 mm à 3 mm, et les couches déposées peuvent avoir une épaisseur totale de l'ordre de 1 mm.

Ladite opération commune suivante est un rétreint dudit tube traité. Elle comporte le chauffage d'une zone de la longueur de ce tube par un moyen de chauffage, à une température de rétreint qui s'accompagne d'un ramollissement dudit verre et d'une diminution des diamètres intérieur et extérieur de ce tube. Cette opération de rétreint comporte plusieurs passes d'un moyen de chauffage parcourant ce tube de ladite extrémité arrière à ladite extrémité avant. Ces passes se succèdent jusqu'à disparition dudit espace intérieur. On forme ainsi une préforme cylindrique pleine comportant un coeur formé à partir de ladite couche de coeur et entouré par une gaine formée à partir de ladite couche de gaine.

Ce rétreint de tels tubes est effectué généralement en plus de deux passes à l'aide d'un moyen de chauffage constitué par un chalumeau oxygène-hydrogène, de la manière suivante :

Le tube traité est maintenu entre les mors d'un tour de verrier à axe horizontal, mis en rotation, et chauffé. En se déplaçant d'une extrémité à l'autre de la partie utile, le chalumeau élève la température de la matière à un niveau où l'action des forces de tension superficielle provoque le rétreint (2100 à 2200°C à la surface externe du tube). Après un certain nombre de passes, le rétreint est complet et le barreau de verre obtenu constitue ladite préforme.

Ladite opération commune suivante est le fibrage de cette préforme. Elle comporte un chauffage d'une zone extrême de la longueur de cette préforme et un étirement de cette zone de manière à diminuer progressivement le diamètre du verre chauffé et à former un fibre optique comportant un coeur et une gaine optique formés à partir dudit coeur et de ladite gaine de cette préforme, respectivement.

Il est connu que l'on peut diminuer le prix de revient au kilomètre de la fibre ainsi obtenue si on augmente l'épaisseur du tube traité. Malheureusement, on constate expérimentalement que le procédé connu décrit ci-dessus n'est plus utilisable lorsque l'épaisseur des tubes devient importante c'est-à-dire supérieure à 10 mm voire à 5 mm.

De telles épaisseurs empêchent le plus souvent les forces de tension superficielles d'assurer à elles seules le rétreint.

Un rétreint complet peut cependant être obtenu à condition d'utiliser une pompe à vide permettant le maintien d'une dépression par rapport à l'atmosphère, par exemple d'une pression de l'ordre de quelques dizaines de Pascals à l'intérieur du tube. Mais dans ce cas, les irrégularités et les fluctuations dimensionnelles des tubes substrats du commerce et les inhomogénéités de chauffage qu'elles entraînent font apparaître durant le rétreint une ovalisation très importante du tube traité. Cette ovalisation rend la préforme inutilisable.

Un tel risque d'ovalisation en cours de rétreint peut apparaître aussi, quoiqu'à un degré généralement bien moindre, avec des tubes d'épaisseurs intermédiaires, par exemple 4 mm, qui sont susceptibles de subir un rétreint complet en l'absence d'une telle dépression.

La présente invention a notamment pour buts de conserver à un dit tube traité, une forme circulaire au court de son rétreint, notamment si ce tube est épais et s'il est mis en dépression pour faciliter son rétreint, de permettre ainsi l'utilisation de tubes plus épais que précédemment pour réaliser une préforme de fabrication de fibre optique, et finalement de diminuer le prix de revient d'une telle fibre.

Le procédé selon la présente invention comporte lesdites opérations communes. Par rapport au procédé connu décrit comportant ces mêmes opérations, il est caractérisé par le fait que, avant ladite opération de rétreint, il comporte en outre une opération de mise en place d'un guide de rétreint, ce guide présentant une surface de révolution autour dudit axe, ce guide pénétrant dans ledit espace intérieur dudit tube traité à ladite extrémité arrière de celui-ci, présentant une longueur dans cet espace intérieur et se terminant vers l'avant à l'intérieur de ce tube à proximité de cette extrémité arrière. L'utilisation d'un tel guide permet d'obtenir les effets suivants : Au début d'une dite passe dudit moyen de chauffage au cours de ladite opération de rétreint, ladite diminution de diamètres qui accompagne le chauffage par ce moyen de chauffage d'une portion arrière non guidée de la longueur de ce tube amène la surface intérieure de cette portion en appui sur une portion en regard de la longueur de ce guide. Cette portion de tube est ainsi guidée pour prendre une forme de révolution autour dudit axe, donc une forme circulaire en section à l'endroit où le tube cesse d'être en appui sur ce guide. Lorsque ledit moyen de chauffage progresse ensuite vers l'avant, la portion qui vient d'être ainsi guidée et qui s'est refroidie et rigidifiée induit une portion consécutive vers l'avant de ce tube à prendre la même forme circulaire avec le même diamètre lorsqu'elle est chauffée de la même manière par ce moyen de chauffage et subit donc la même dite diminution de diamètres. La portion dont la forme circulaire vient d'être ainsi induite ensuite la portion suivante à prendre la même forme, et ainsi de suite jusqu'à ce que ledit moyen de chauffage atteigne ladite extrémité avant de ce tube. Autrement dit on assure selon l'invention un guidage mécanique du tube au cours des premiers instants seulement de chaque passe, c'est-à-dire sur une toute petite portion de la longueur du tube, et cela suffit pour obtenir une forme cylindrique sur toute la longueur du tube.

Dans le cadre de la présente invention, on peut adopter de plus les dispositions parfois préférées suivantes :

Dans le cas où ladite opération de rétreint comporte une succession de plus de deux dites passes dudit moyen de chauffage au cours desquelles ledit diamètre intérieur du tube traité prend des valeurs successives décroissant à partir d'un diamètre intérieur initial, ledit guide de rétreint présente à ladite extrémité arrière un diamètre arrière peu inférieur audit diamètre intérieur initial dudit tube traité, le diamètre de ce guide décroissant vers l'avant à partir de son dit diamètre arrière, de manière que, au début desdites passes successives, des portions successives de la longueur de la surface intérieure dudit tube traité viennent en appui sur des portions successives en regard de la longueur de ce guide, ces portions se succèdant d'arrière en avant et présentant des diamètres successifs décroissants.

Ledit guide de rétreint présente sensiblement la forme d'un cône de révolution autour dudit axe avec pointe vers l'avant.

Au cours de ladite opération de rétreint, ledit espace intérieur audit tube traité est soumis à une dépression de rétreint par rapport à l'atmosphère extérieure de manière à permettre ou à aider à ladite diminution desdits diamètres intérieur et extérieur de ce tube au cours de ladite passe dudit moyen de chauffage.

Ledit diamètre extérieur du tube traité est compris entre 30 et 80 mm, et ledit diamètre intérieur initial entre 10 et 30 mm, ladite épaisseur de ce tube étant au moins égale à 20 mm, ladite dépression de rétreint étant comprise entre 10% et 100% de la pression atmosphérique.

A l'aide des figures schématiques ci-jointes on va décrire plus particulièrement ci-après, à titre d'exemple non limitatif, comment la présente invention peut-être mise en oeuvre dans le cadre de l'exposé qui en a été donné ci-dessus. Lorsqu'un même élément est représenté sur plusieurs figures il y est désigné par le même signe de référence.

Le mode de mise en oeuvre décrit comporte les dispositions parfois préférées mentionnées ci-dessus. Il doit être compris que les éléments mentionnés peuvent être remplacés par d'autres éléments assurant les mêmes fonctions techniques.

La figure 1 représente une vue en coupe axiale d'un tube de silice au départ d'une dite opération de rétreint, les moyens permettant d'effectuer cette opération étant également représentés.

La figure 2 représente une vue partielle en coupe axiale des mêmes éléments au début d'une passe dudit moyen de chauffage au cours de la même opération de rétreint.

La figure 3 représente une vue en coupe transversale d'un segment angulaire du tube de silice de la figure 1, selon un plan III de la figure 1, l'échelle étant agrandie.

Sur ces figures, l'axe horizontal du tube traité à rétreindre est représenté en A. Ce tube lui-même est représenté en 2 et ses extrémités arrière et avant en 30 et 33 respectivement. Il est constitué de silice. Il a par exemple un diamètre extérieur de 50 mm, un diamètre intérieur après dépôt de 18 mm et une longueur de 500 mm.

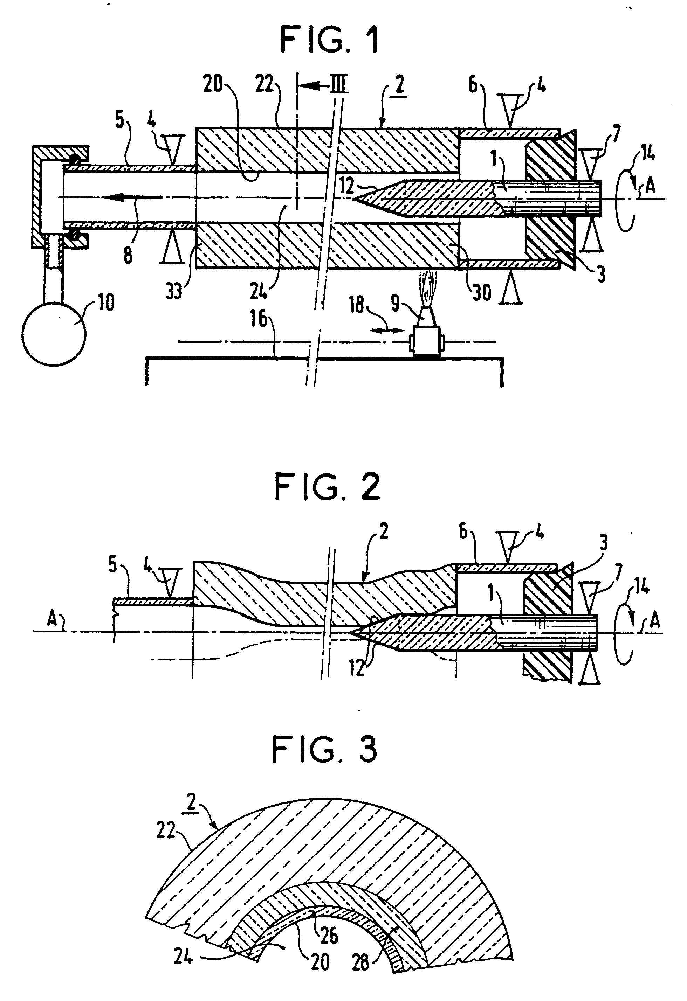

Lesdites surfaces intérieure et extérieure de ce tube sont représentées en 20 et 22, respectivement, et le dit espace intérieur en 24. Lesdites couches de coeur et de gaine sont représentées en 26 et 28, respectivement, sur la figure 3.

Des moyens de pompage 10 sont disposés à l'extrémité avant du tube 2. Ce tube est équipé de deux embouts en silice 5 (par exemple diamètre extérieur 25 mm, diamètre intérieur 20 mm) à son extrémité du côté du pompage et 6 (par exemple diamètre extérieur 50 mm, diamètre intérieure 45 mm) à son autre extrémité. Ces embouts sont placés dans les mors 4 d'un tour de verrier non représenté.

Le guide de rétreint est une portion avant 12 d'une baguette en silice 1. Cette portion a une longueur d'environ 30 mm et présente une surface de guidage conique. Le diamètre de la baguette 1 est choisi aussi proche que possible du diamètre intérieur du tube 2. Ce diamètre est par exemple de 17 mm.

A l'aide d'un mors supplémentaire 7 du tour, la baguette 1 est positionnée coaxialement de telle manière que son extrémité conique pénètre entièrement à l'intérieur du tube à réteindre 2. L'espace restant entre l'embout 6 et la baguette 1 est obturé par un bouchon 3 (par exemple en caoutchouc).

Le pompage est alors mis en route selon la flèche 8 et une pression de l'ordre de plusieurs dixièmes de Pascal, 1,3 Pa par exemple est maintenue à l'intérieur du tube 2.

Le tour est mis en rotation selon la flèche 14 (par exemple à une vitesse d'environ 60 tours per minute) et le chauffage avec le chalumeau 9 (qui reste fixe dans un premier temps) commence du côté de la baguette 1, jusqu'à ce que le tube 2 soit collé au niveau du plus gros diamètre de la baguette 1.

Le chalumeau 9 est alors mis en mouvement de translation vers l'avant, le long d'un banc de translation 16 selon la flèche 18 à une vitesse convenable (par exemple 5 mm par minute) pour que les phénomènes de rétreint et de collage se poursuivent sur une première portion arrière de la surface conique de la baguette 1. Cette vitesse est choisie, compte tenu de la quantité de chaleur apportée par le chalumeau (mesurée par les débits d'oxygène et d'hydrogène utilisés soit par exemple 60 à 70 litres par minute d'oxygène et 150 à 160 litres par minute d'hydrogène).

La surface conique de la baguette 1 sert alors de guide de départ, forçant en quelque sorte la portion initiale du tube de silice épais 2 à conserver la symétrie de révolution pendant le début du rétreint.

Au cours du déplacement ultérieur du chalumeau, les portions de tube rétreintes qui se solidifient induisent chacune à son tour la forme des portions qui les suivent, ce qui permet à l'ensemble du tube de garder la symétrie de révolution au cours de la totalité de la passe du chalumeau.

Le nombre voulu de passes du chalumeau est effectué en fonction de la puissance de chauffe disponible afin d'obtenir le rétreint complet (par exemple 6 à 8 passes). Des portions successives de la surface du guide 12 servent de guides de départ au début de ces passes successives.

Ces portions se succèdent d'arrière en avant avec des diamètres décroissants.

A la fin du traitement le tube est coupé à ses extrémités, et notamment au droit de l'extrémité de la surface conique 12 et la préforme est terminée.

## Revendications

1. Procédé de fabrication de fibre optique avec préforme obtenue par rétreint, ce procédé comportant les opérations suivantes :

— obtention d'un tube traité (2) présentant un axe (A), une longueur qui s'étend selon cet axe d'une extrémité arrière (30) à une extrémité avant (33), une épaisseur qui s'étend entre deux surfaces cylindriques intérieure (20) et extérieure (22) qui sont de révolution autour dudit axe et qui présentent deux diamètres intérieur et extérieur, respectivement, cette surface intérieure entourant un espace intérieur (24), ce tube étant constitué d'un verre dont la composition et l'indice de réfraction varient dans son épaisseur avec la distance audit axe, de manière à former une couche de coeur (26) s'étendant dans cette épaisseur à partir de ladite surface intérieure et une couche de gaine (28) présentant un indice de réfraction plus faible et entourant cette couche de coeur,

— rétreint de ce tube traité, cette opération de rétreint comportant le chauffage d'une zone de la longueur de ce tube par un moyen de chauffage (9) à une température de rétreint qui s'accompagne d'un ramollissement dudit verre et d'une diminution desdits diamètres intérieur et extérieur de ce tube, cette opération de rétreint comportant plusieurs passes d'un moyen de chauffage parcourant ce tube de ladite extrémité arrière à ladite extrémité avant, ces passes se succèdant jusqu'à disparition dudit espace intérieur (24), de manière à former une préforme cylindrique pleine comportant un coeur formé à partir de ladite couche de coeur et entouré par une gaine formée à partir de ladite couche de gaine,

— et fibrage de cette préforme, cette opération de fibrage comportant un chauffage d'une zone extrême de la longueur de cette préforme et un étirement de cette zone de manière à diminuer progressivement le diamètre du verre chauffé et à former une fibre optique comportant un coeur et une gaine optique formés à partir dudit coeur et de ladite gaine de cette préforme, respectivement,

— ce procédé étant caractérisé par le fait que, avant ladite opération de rétreint, il comporte en outre une opération de mise en place d'un guide de rétreint (12), ce guide présentant une surface de révolution autour dudit axe (A), ce guide pénétrant dans ledit espace intérieur (24) dudit tube traité (2) à ladite extrémité arrière (30) de celui-ci, présentant une longueur dans cet espace intérieur et se terminant vers l'avant à l'intérieur de ce tube à proximité de cette extrémité arrière, de manière que, au début d'une dite passe dudit moyen de chauffage (9) au cours de ladite opération de rétreint, ladite diminution de diamètres qui accompagne le chauffage par ce moyen de chauffage d'une portion arrière non guidée de la longueur de ce tube amène la surface intérieure de cette portion en appui sur une portion en regard de la longueur de ce guide et que cette portion de tube soit ainsi guidée pour prendre une forme de révolution autour dudit axe, et que, lorsque ledit moyen de chauffage progresse ensuite vers l'avant, la portion qui vient d'être ainsi guidée et qui s'est refroidie et rigidifiée induise une portion consécutive vers l'avant de ce tube à prendre elle aussi une forme de révolution lorsqu'elle est chauffée par ce moyen de chauffage et subit ladite diminution de diamètres, et ainsi de suite jusqu'à ce que ledit moyen de chauffage atteigne ladite extrémité avant (33) de ce tube.

2. Procédé selon la revendication 1, caractérisé par le fait que ladite opération de rétreint comporte une succession de plus de deux dites passes dudit moyen de chauffage (9) au cours desquelles ledit diamètre intérieur du tube traité (2) prend des valeurs successives décroissantes à partir d'un diamètre initial, et par le fait que ledit guide de rétreint (12) présente à ladite extrémité arrière (30) un diamètre arrière peu inférieur audit diamètre intérieur initial dudit tube traité (2), le diamètre de ce guide décroissant vers l'avant à partir de son dit diamètre arrière, de manière que, au début desdites passes successives, des portions successives de la longueur de la surface intérieure (20) dudit tube traité viennent en appui sur des portions successives en regard de la longueur de ce guide, ces portions se succèdant d'arrière en avant et présentant des diamètres successifs décroissants.

3. Procédé selon la revendication 2, caractérisé par le fait que ledit guide de rétreint (12) présente sensiblement la forme d'un cône de révolution autour dudit axe (A) avec pointe vers l'avant.

4. Procédé selon la revendication 2, caractérisé par le fait que, au cours de ladite opération de rétreint, ledit espace intérieur (24) audit tube traité (2) est soumis à une dépression de rétreint par rapport à l'atmosphère extérieure de manière à permettre ladite diminution desdits diamètres intérieur et extérieur de ce tube au cours de ladite passe dudit moyen de chauffage (9).

5. Procédé selon la revendication 4, caractérisé par le fait que ledit diamètre extérieur du tube traité (2) est compris entre 30 et 80 mm, et ledit diamètre intérieur initial entre 10 et 30 mm, ladite épaisseur de ce tube étant au moins égale à 20 mm, ladite dépression de rétreint étant comprise entre 10% et 100% de la pression atmosphérique.

6. Procédé selon la revendication 1, dans lequel, au cours de ladite opération de rétreint, ledit axe (A) du tube traité (2) est horizontal et ce tube est entraîné en rotation continue autour de cet axe.

7. Procédé selon la revendication 1, dans lequel, ledit verre constituant ledit tube traité (2) est de la silice, et ledit guide de rétreint (12) est également constitué de silice.

**Patentansprüche**

1. Verfahren zur Herstellung optischer Fasern aus einem durch Einschnürung gewonnenen Rohling, wobei das Verfahren folgende Arbeitsgänge aufweist:
— Herstellen eines behandelten Rohrs (2) mit einer Achse (A), einer Länge, die sich entlang der Achse von einem hinteren Ende (30) bis zu einem vorderen Ende erstreckt, einer Dicke, die sich zwischen zwei zylindrischen Oberflächen erstreckt, einer inneren (20) und einer äußeren (22), welche Rotationsflächen um diese Achse bilden und zwei Durchmesser, einen inneren und einen äußeren, besitzen, wobei die innere Oberfläche einen Innenraum (24) umgibt und das Rohr aus einem Glas besteht, dessen Zusammensetzung und Brechungsindex sich über die Dicke mit dem Abstand zur Achse ändern, derart, daß eine Kernschicht (26), die sich in der Dicke von der inneren Oberfläche aus erstreckt, und eine Mantelschicht (28) gebildet wird, die einen kleineren Brechungsindex besitzt und die Kernschicht umgibt,
— Einschnüren des behandelten Rohrs, wobei dieser Arbeitsgang die Erwärmung einer Zone von der Länge des Rohrs durch eine Heizvorrichtung (9) auf eine Einschnürungstemperatur, die mit einer Erweichung des Glases und einer Verringerung des inneren und des äußeren Durchmessers des Rohrs einhergeht, wobei die Einschnürungsoperation ein mehrmaliges Überstreichen des Rohrs mit einem Heizmittel vom hinteren Ende zum vorderen Ende des Rohrs umfaßt und die Durchgänge bis zum Verschwinden des Innenraums (24) aufeinanderfolgen, derart, daß ein massiver zylindrischer Rohling mit einem Kern erzeugt wird, der aus der Kernschicht gebildet wird und von einer Hülle umgeben ist, die aus der Mantelschicht gebildet wird,
— und Überführen des Rohlings in eine Faser, wobei dieser Arbeitsgang die Erwärmung einer Endzone der Länge des Rohlings sowie ein Einschnüren dieser Zone unter zunehmender Verringerung des Durchmessers des erwärmten Glases und unter Bildung einer optischen Faser mit einem optischen Kern sowie einer optischen Hülle umfaßt, die aus dem Kern und dem Mantel des Rohlings besteht,
— wobei das Verfahren dadurch gekennzeichnet ist, daß es vor der Einschnürungsoperation weiter die Anbringung einer Einschnürungsführung (17) umfaßt, wobei die Führung eine Rotationsfläche um die Achse (A) besitzt, dabei in den Innenraum(24) des behandelten Rohrs (2) am hinteren Ende (30) desselben eindringt, sich ein Stück weit im Innenraum erstreckt und im Inneren des Rohrs nach vorne in der Nähe dieses hinteren Endes endet, derart, daß im Verlauf der Einschnürungsoperation am Beginn eines Durchgangs der Heizvorrichtung (9) die Verringerung des Durchmessers, welche mit der Erwärmung eines hinteren, nichtgeführten Abschnitts der Länge des Rohrs durch die Heizvorrichtung einhergeht, die innere Oberfläche dieses Abschnitts zum Anliegen an einem benachbarten Längsabschnitt der Führung bringt, und so dieser Abschnitt des Rohrs geführt wird, um eine Rotationsform um die Achse anzunehmen, und daß beim anschließenden Weiterbewegen der Heizvorrichtung nach vorne der bis dahin geführte Abschnitt, der sich abgekühlt und verfestigt hat, einen sich anschließenden, zum vorderen Ende des Rohrs hin gelegenen Abschnitt veranlaßt, ebenfalls eine Rotationsform anzunehmen, wenn er durch die Heizvorrichtung erwärmt wird und die Verringerung der Durchmesser erfährt, und so weiter, bis die Heizvorrichtung das vordere Ende (33) des Rohrs erreicht.

2. Verfahren nach Anspruch 1, dadurch gekennzeichnet, daß die Einschnürungsoperation eine Folge von mehr als zwei Durchgängen der Heizvorrichtung (9) umfaßt, während denen der Innendurchmesser des behandelten Rohrs (2) ab dem Anfangsdurchmesser nacheinander abnehmende Werte annimmt, und daß die Einschnürungsführung (12) am hinteren Ende (30) einen hinteren Durchmesser aufweist, der etwas kleiner als der anfängliche Innendurchmesser des behandelten Rohrs (2) ist, wobei der Durchmesser der Führung ab ihrem hinteren Durchmesser nach vorne zu abnimmt, derart, daß am Beginn der aufeinanderfolgenden Durchgänge aufeinanderfolgende Abschnitte der Länge der inneren Oberfläche des behandelten Rohrs (32) sich an aufeinanderfolgenden, der Länge der Führung gegenüberliegenden Abschnitten anlegen, die von hinten nach vorne aufeinanderfolgen und nacheinander abnehmende Durchmesser aufweisen.

3. Verfahren nach Anspruch 2, dadurch gekennzeichnet, daß die Einschnürungsführung (12) im wesentlichen die Form eines um die Achse (A) verlaufenden Rotationskonus mit nach vorne gerichteter Spitze besitzt.

4. Verfahren nach Anspruch 2, dadurch gekennzeichnet, daß im Lauf der Einschnürungsoperation der Innenraum (24) des behandelten Rohrs (2) im Vergleich zur Außenatmosphäre einem Einschnürungsunterdruck ausgesetzt wird, um die Verringerung der inneren und äußeren Durchmesser des Rohrs beim Durchgang der Heizvorrichtung (9) zu ermöglichen.

5. Verfahren nach Anspruch 4, dadurch gekennzeichnet, daß der Außendurchmesser des behandelten Rohrs (2) zwischen 30 und 80 mm, und der anfängliche Innendurchmesser zwischen 10 und 30 mm liegt, wobei die Dicke des Rohrs mindestens 20 mm beträgt und der Einschnürungsunterdruck zwischen 10% und 100% des atmosphärischen Drucks liegt.

6. Verfahren nach Anspruch 1, in dem während der Einschnürungsoperation die Achse (A) des behandelten Rohrs waagrecht liegt und das Rohr um diese Achse ständig in Drehung versetzt wird.

7. Verfahren nach Anspruch 1, in dem das Glas, aus dem das behandelte Rohr (2) besteht, aus Quarz, und die Einschnürungsführung (12) ebenfalls aus Quarz besteht.

## Claims

1. A method of manufacturing an optical fiber from a preform obtained by constricting a tube, said method comprising the following operations :
— obtaining a treated tube (2) having an axis (A), a length which extends along said axis from a rear end (30) to a front end (31), a thickness which extends between two cylindrical surfaces, namely an inside surface (20) and an outsid surface (22) which are both surfaces of revolution about said axis and which define an inside diameter and an outside diameter respectively, said inside surface surrounding an inside space (24), said tube being made of a glass whose composition and whose refractive index vary across its thickness with increasing distance from said axis so as to form a core layer (26) extending through said thickness from said inside surface, and a cladding layer (28) having a lower refractive index and surrounding said core layer ;
— constricting said treated tube, said constriction operation including heating a zone of the length of said tube by heater means (9) to a constricting temperature which is accompanied by a softening of said glass and by a reduction in said inside and outside diameters of said tube, said constricting operation comprising a plurality of passes of a heater means running along said tube from said rear end to said front end, said passes following one another until said inside space (24) disappears so as to form a solid cylindrical preform comprising a core formed from said core layer and surrounded by a cladding formed from said cladding layer, and
— making a fiber from said preform, said operation of making a fiber comprising heating an end zone of the length of said preform and drawing said zone so as to progressively reduce the diameter of the heated glass to form an optical fiber comprising an optical core and an optical cladding formed respectively from said core and said cladding of said preform,

— said method being characterized in that, prior to said constriction operation, it further includes an operation of installing a constriction guide (12), said guide having a surface of revolution about said axis (A), said guide penetrating into said inside space (24) of said treated tube (2) at said rear end (30) thereof, having a length inside said inside space, and terminating at its front end inside said tube at a point which is in the proximity of said rear end, such that at the beginning of any one of said passes of said heater means (9) during said constricting operation, said diameter reduction which accompanies said heater means of a non-guided rear portion of the length of said tube causes the inside surface of said portion to bear against a facing portion of the length of said guide, and such that said tube portion is thus guided to take up the form of a body of revolution about said axis, and that while said heater means subsequently moves forwards, the portion which has thus just been guided and which has cooled and become rigid causes the next succeeding portion of said tube in the forwards direction to take up the form of a body of revolution when it is heated by said heater means and is subjected to said diameter reduction, and so on until said heater means reaches the front end (33) of said tube.

2. A method according to claim 1, characterized in that said constriction operation comprises a succession of more than two of said passes by said heater means (9) during which said inside diameter of the treated tube (2) takes up successively smaller values starting from an initial diameter, and in that said constriction guide (12) has a rear diameter at said rear end (30) which is slightly smaller than said initial inside diameter of said treated tube (2), the diameter of said guide decreasing forwardly from its said rear diameter in such a manner that at the beginning of each successive pass, successive portions of the length of the inside surface (20) of said treated tube are caused to bear against successive facing portions of the length of said guide, said portions following one another from the rear end towards the front end and having successively smaller diameters.

3. A method according to claim 2, characterized in that said constriction guide (12) is substantially in the form of a circular cone about said axis (A) with its point extending forwardly.

4. A method according to claim 2, characterized in that during said constricting operation, said inside space (24) of said treated tube (2) is subjected to a constricting suction pressure relative to the outside atmosphere in such a manner as to enable said reduction of said inside and outside diameters of said tube to take place during said pass of said heater means (9).

5. A method according to claim 4, characterized in that said outside diameter of the treated tube (2) lies between 30 mm and 80 mm, and said initial inside diameter lies between 10 mm and 30 mm, said tube thickness being not less than 20 mm, and said constricting suction pressure lying between 10% and 100% of atmospheric pressure.

6. A method according to claim 1, wherein, during said constriction operation, said axis (A) of the treated tube (2) is horizontal and said tube is continuously rotated about said axis.

7. A method according to claim 1, wherein said glass constituting said treated tube (2) is silica, and said constriction guide (12) is also made of silica.

# FIG. 1

# FIG. 2

# FIG. 3